# EUROPÄISCHE PATENTANMELDUNG

(11) **EP 1 256 363 A1**
(43) Veröffentlichungstag der Anmeldung: **13.11.2002**
(21) Anmeldenummer: 01111039.2
(22) Anmeldetag: 08.05.2001
(51) Int. Cl.: A63C 17/12, B62M 1/04, B62K 3/00

(54) **Vorrichtung zu Übertragung einer Antriebskraft auf ein mindestens zweirädriges Fahrzeug, insbesondere auf einen mit Muskelkraft antreibbaren Roller**

(71) Anmelder: Wild, Walter, 85084 Reichertshofen (DE)
(72) Erfinder: Wild, Walter, 85084 Reichertshofen (DE)
(74) Vertreter: Liebl, Thomas, Dipl.-Ing.

(57) **Zusammenfassung**

Die Erfindung betrifft eine Vorrichtung zur Übertragung einer Antriebskraft auf ein mindestens zweirädriges Fahrzeug, insbesondere auf einen mit Muskelkraft antreibbaren Roller (1), mit einer Trittplatte als Standfläche für einen Fahrzeugbenutzer sowie mit einer Antriebsvorrichtung (16). Erfindungsgemäß ist die Trittplatte als zweiseitige Wippe (11) ausgebildet, die um eine fahrzeugfeste Wippachse (12) in eine erste maximale Wippstellung (13) und eine zweite maximale Wippstellung (14) verschwenkbar ist. Die Wippe (11) ist mit der Antriebsvorrichtung (16) gekoppelt dergestalt, dass bei jeder Verschwenkung der Wippe (11) um die Wippachse (12) in Richtung der ersten als auch in Richtung der zweiten maximalen Wippstellung (13, 14) über die Antriebsvorrichtung (16) eine stets in Fahrtrichtung wirkende Antriebskraft auf das Fahrzeug (1) übertragbar ist.

## Beschreibung

Die Erfindung betrifft einen Vorrichtung zur Übertragung einer Antriebskraft auf ein mindestens zweirädriges Fahrzeug, insbesondere auf einen mit Muskelkraft antreibbaren Roller, nach dem Oberbegriff des Anspruchs 1.

Ein zweirädriger Tretroller ist allgemein bekannt und weist eine um eine Vertikalachse schwenkbare Lenkstange sowie eine in etwa horizontal ausgerichtete Trittplatte zwischen dem Vorderrad und dem Hinterrad auf. Das Vorderrad ist an einem unterem Bereich der Lenkstange angeordnet. Regelmäßig steht hier ein Benutzer mit einem Fuß auf der Trittplatte während er mit dem anderen Fuß über den Boden eine Antriebskraft auf den Tretroller durch wiederholtes Aufsetzen und anschiebendes Abstoßen vom Boden ausübt. Die Fahrtrichtung des Tretrollers kann über entsprechendes Verschwenken der Lenkstange vorgegeben werden.

Ferner ist eine gattungsgemäße Vorrichtung zur Übertragung einer Antriebskraft auf einen mit Muskelkraft antreibbaren Roller allgemein bekannt, der eine Trittplatte als Standfläche für einen Fahrzeugbenutzer sowie eine Antriebsvorrichtung aufweist.

Konkret weist die Antriebsvorrichtung hier eine Zahnstange auf, die wiederum mit einem am Hinterrad angeordneten Zahnradelement in einer Eingriffsverbindung steht. Bei einer Betätigung der Antriebsvorrichtung wird die Zahnstange linear verschoben und dadurch das Antriebsritzel des Hinterrades angetrieben. Am Hinterrad ist ein Freilauf vorgesehen, der das lineare Rückstellen der Zahnstange in die Ausgangsposition bei einer erneuten Betätigung der Antriebsvorrichtung ermöglicht. Eine Antriebskraft kann hier somit ebenso wie beim Tretroller nur intervallweise, das heißt nicht kontinuierlich auf das Fahrzeug übertragen werden, was insbesondere bei einem zweirädrigen Roller nur zu einem geringen Fahrkomfort führt, da z. B. eine für die Fahrzeugbalance erwünschte höhere Fahrgeschwindigkeit nur äußerst mühsam erreicht wird.

Aufgabe der Erfindung ist es, eine alternative Vorrichtung zur Übertragung einer Antriebskraft auf ein mindestens zweirädriges Fahrzeug, insbesondere auf einen mit Muskelkraft antreibbaren Roller, zu schaffen, mit einem eine Übertragung einer Antriebskraft auf einfache und kraftsparende Weise möglich ist und mit der der Fahrkomfort für einen Benutzer erhöht ist.

Diese Aufgabe wird gelöst mit den Merkmalen des Anspruchs 1.

Gemäß Anspruch 1 ist die Trittplatte als zweiseitige Wippe ausgebildet, die um eine fahrzeugfeste Wippachse zwischen einer ersten maximalen Wippstellung und einer zweiten maximalen Wippstellung verschwenkbar ist. Die Wippe ist mit der Antriebsvorrichtung so gekoppelt, dass bei jeder Verschwenkung der Wippe um die Wippachse, das heißt bei einer Verschwenkung sowohl in Richtung der ersten als auch in Richtung der zweiten maximalen Wippstellung, über die Antriebsvorrichtung eine stets in Fahrtrichtung wirkende Antriebskraft auf das Fahrzeug übertragbar ist.

Vorteilhaft wird hiermit somit bei jeder Wippbewegung egal ob diese in die eine oder in die andere Wipprichtung erfolgt, eine Antriebskraft in Fahrtrichtung auf das Fahrzeug übertragen. Dadurch wird ein hoher Fahrkomfort erreicht, da hierdurch ein kontinuierlicher Antrieb erfolgt, ohne dass, wie dies beim Tretroller oder beim Zahnstangenantriebsroller der Fall ist, die Antriebskraft intervallartig aufgebracht wird. Zudem lassen sich bereits sehr früh solche Fahrgeschwindigkeit erzielen, mit denen ein einfaches Balancieren auch auf einem zweirädrigen Fahrzeug, wie z. B. einem Roller, möglich ist. Durch den kontinuierlichen Antrieb ist die Antriebskraft somit insgesamt optimiert aufbringbar. Je nach Auslegung und Einstellung der Wippenmechanik kann hierbei auch ein Fitnesseffekt z. B. in der Art eines Steppers erzielt werden.

Gemäß einer bevorzugten Ausgestaltung der Erfindung nach Anspruch 2 weist die Antriebsvorrichtung ein Antriebsgestänge auf, das einerseits mit der Wippe und andererseits mit einem Antriebsgetriebe als weiterem Bestandteil der Antriebsvorrichtung gekoppelt ist. Die Wippbewegung der Wippe ist über das Antriebsgestänge auf das Antriebsgetriebe übertragbar und wird dort in eine stets gleichgerichtete Antriebskraft umgewandelt. Ein Aufbau der Antriebsvorrichtung aus einem mit einem Antriebsgestänge gekoppelten Antriebsgetriebe erlaubt eine besonders funktionssichere und mechanisch einfach zu realisierende Kraftübertragung, so dass ein derartiger Aufbau insgesamt auch relativ einfach und preiswert herstellbar ist. Des Weiteren ist bei einer entsprechenden Auslegung diese Antriebsvorrichtung auch mit relativ geringem und wenig wartungsanfälligem Bauteilaufwand herstellbar.

Grundsätzlich gibt es verschiedene Möglichkeiten die Antriebsvorrichtung mit Antriebsgestänge und Antriebsgetriebe auszubilden. Gemäß einer besonderen bevorzugten konkreten Ausgestaltung nach Anspruch 3 ist jedoch vorgesehen, dass die Antriebsvorrichtung zwei Antriebsstangen als Antriebsgestänge aufweist, die wippenseitig an bezüglich der Wippenachse gegenüberliegenden Wippenbereichen angelenkt sind und die ferner an jeweils einem Zahnradelement als Bestandteil des Antriebsgetriebes angelenkt sind, wobei wenigstens eine der beiden Antriebsstangen-Anlenkstellen, vorzugsweise die zahnradelementseitige Anlenkstelle, als Freilaufverbindung ausgebildet ist. Die beiden Zahnradelemente stehen miteinander in Eingriff. Bei einer Wippbewegung der Wippe in Richtung der ersten oder zweiten maximalen Wippstellung schiebt die den abgesenkten Wippenbereich zugeordnete Antriebsstange das dieser Antriebsstange zugeordnete Zahnradelement entgegen der Freilaufwirkung der Freilaufverbindung an und verdreht dieses entsprechend. Aufgrund der Zwangskopplung der beiden Zahnradelemente ist auch das andere Zahnradelement gegenläufig dazu verdrehbar unter Ausnutzung der Freilaufwirkung der diesem angehobenen Wippenbereich zugeordneten Antriebstangen-Freilaufverbindung. Eines der beiden Zahnradelemente ist dabei als Antriebsritzel-Zahnradelement ausgebildet und kämmt mit einem Antriebsritzel eines Hülltriebes, wobei das Antriebsritzel einen weiteren Bestandteil des Antriebsgetriebes ausbildet.

Mit einem derartigen Aufbau wird auf einfache Weise eine stets in eine Richtung wirkende Antriebskraft auf das Fahrzeug übertragbar, da die Zahnradelemente aufgrund der unterschiedlich gerichteten Wippbewegungen zwar gegenläufig zueinander verdrehbar sind, jedoch ein Antrieb des Antriebsritzels nur immer über eines der beiden Zahnradelemente in eine Richtung erfolgt. Ein derartiger Aufbau mit lediglich zwei Zahnradelementen und einem Antriebsritzel sowie mit z. B. den Zahnradelementen über eine Freilaufverbindung gekoppelten Antriebsstangen ist relativ einfach und mit einem geringen Bauteilaufwand herstellbar. Über die Freilaufverbindung ist dabei sichergestellt, dass bei einer Wippbewegung und einem Antreiben eines der Zahnradelemente mittels einer der Antriebsstangen die andere Antriebsstange die Getriebeanordnung nicht blockieren kann, sondern über die Freilaufverbindung hier eine Freigängigkeit geschaffen wird. Ein Antrieb erfolgt hier somit stets über lediglich eine der Antriebsstangen.

Besonders bevorzugt ist mit den Merkmalen des Anspruchs 4, dass die Antriebsstange bei einer Absenkung des dieser zugeordneten Wippenbereichs entgegen der Freilaufwirkung auf Schub für ein Anschieben und Verdrehen des zugeordneten Zahnradelementes und damit auch des damit zusammenwirkenden weiteren Zahnradelementes belastbar ist. Die dem weiteren Zahnradelement und damit dem angehobenen Wippenbereich zugeordnete Antriebsstange gibt dieses Verdrehen unter Ausnutzung der Freilaufwirkung der Freilaufverbindung zum weiteren Zahnradelement frei. Insgesamt wird hier somit auch eine vorteilhafte Freilaufvorrichtung geschaffen, die auf jeden Fall sicherstellt, dass bei einer Wippbewegung sowohl in die eine als auch in die andere Wipprichtung stets ein Antrieb eines der beiden Zahnradelemente und damit des Antriebsritzels möglich ist, ohne dass dieses Antreiben durch das andere Zahnradelement und der diesem zugeordneten Antriebsstange behindert wird. Ein derartiger Aufbau mit zwei Zahnradelementen und einem einen der beiden Zahnradelemente zugeordneten Antriebsritzel ist zudem sehr kompakt herstellbar, so dass sich auch vorteilhaft kleine Baugrößen der Antriebsvorrichtung ergeben.

Gemäß einer besonders bevorzugten Ausgestaltung nach Anspruch 5 sind die beiden Zahnradelemente und die Antriebsstangen jeweils als Gleichteile ausgebildet, die zusammen mit der Wippe in einer Nullstellung der Wippe, bei der diese in etwa waagrecht ausgerichtet ist, eine Art gleichschenkliges Dreieck ausbilden. Mit einer derartigen bevorzugten geometrischen Anordnung der einzelnen Bauteile wird eine besonders funktionssichere Kinematik bei der Übertragung der Antriebskraft erzielt. Zudem wird hier mit einer derartigen geometrischen Anordnung ein besonders kompakter Aufbau der Antriebsvorrichtung mitsamt damit gekoppelter Wippe möglich. Vorteilhaft liegen hierzu gemäß Anspruch 6 die Drehachsen der Zahnradelemente zudem in etwa auf gleicher Höhe und liegt die Wippachse in einem mittleren Bereich zwischen den beiden Drehachsen oberhalb der Zahnradelemente.

Grundsätzlich gibt es verschiedenen Möglichkeiten die Freilaufverbindung zwischen der Antriebsstange und dem jeweils zugeordneten Zahnradelement zu realisieren. Gemäß einer besonders bevorzugten Ausgestaltung nach Anspruch 7 ist jedoch vorgesehen, dass die Freilaufverbindung durch ein endseitig an jeder Antriebsstange ausgebildetes Ratschenelement ausgebildet ist. Dieses Ratschenelement umfasst gemäß Anspruch 8 vorzugsweise einen Ratschenkopf der an der Antriebsstange angelenkt ist und in etwa im Bereich der Drehachse mit dem jeweils zugeordneten Zahnradelement gekoppelt ist. Der Ratschenkopf geht bei einer Absenkung des diesen zugeordneten Wippenbereichs entgegen der Durchratschrichtung als Freilaufrichtung mit der Antriebsstange auf Block, um eine Antriebskraft auf das zugeordnete Zahnradelement auszuüben. Andererseits gibt der Ratschenkopf bei einer Anhebung des diesem zugeordneten Wippenbereichs das Verdrehen des zugeordneten Zahnradelementes unter Ausnutzung des Durchratschens als Freilaufwirkung frei. Mit einem derartigen Ratschenelement kann auf besonders einfache und vorteilhafte Weise eine Freilaufverbindung hergestellt werden, die zudem mechanisch stabil und äußerst belastbar ist.

Gemäß Anspruch 9 ist der Hülltrieb als formschlüssiges und/oder reib- und/oder kraftschlüssiges Zugmittelgetriebe ausgebildet. Grundsätzlich kann dieses Zugmittelgetriebe als Flachriementrieb und/oder als Keilriementrieb und/oder als Zahnriementrieb ausgebildet sein. Bevorzugt ist jedoch gemäß Anspruch 10 eine Ausbildung als Kettentrieb, der eine endlose Antriebskette aufweist, die wenigstens zwei Kettenräder umschlingt. Eines dieser Kettenräder ist als Antriebsritzel-Kettenrad fest mit dem Antriebsritzel verbunden und zusammen mit diesem verdrehbar. Ein derartiger Kettentrieb ist besonders stabil und funktionssicher sowie schlupffrei, so dass die Antriebskraft auf vorteilhafte einfache Weise auf das Fahrzeug übertragen werden kann.

Gemäß einer bevorzugten konkreten Ausgestaltung hierzu ist nach Anspruch 11 zusätzlich zum Antriebsritzel-Kettenrad ein davon beabstandetes weiteres Kettenrad vorgesehen, das im Radnabenbereich eines Rades angeordnet ist und z. B. auch mit einer Freilaufeinrichtung gekoppelt sein kann. Im Falle einer Kopplung mit einer Freilaufeinrichtung kann das Rad auch bei angehaltener Kette, wenn vom Benutzer keine Wippbewegung aufgebracht wird, weiterlaufen.

Das Antriebsgestänge und das Antriebsgetriebe können nach Anspruch 12 in einem Getriebegehäuse angeordnet sein, das durch zwei vorzugsweise über wenigstens einen Abstandshalter beabstandete plattenförmige Gehäusewände ausgebildet ist. Die Zahnradelemente, die Wippe, sowie ein Kettenrad eines Kettentriebs können hierbei über in den Gehäusewänden gelagerte Lagerbolzen vorzugsweise im Bereich zwischen den Gehäusewänden drehbar und/oder verschwenkbar angeordnet und gehalten sein. Die Antriebsstangen sind aus dem Getriebegehäuse heraus zu den zugeordneten Wippenbereichen geführt und dort angelenkt. Mit einem derartigen Getriebegehäuse ist eine vorteilhafte Abschottung der Getriebemechanik möglich, wodurch die Gefahr einer Beeinträchtigung oder einer Manipulation der Antriebsvorrichtung vorteilhaft reduziert werden kann. Zudem kann mit einem derartigen Gehäuse eine vorteilhafte Abschirmung der gegebenenfalls geschmierten Bauteile erzielt werden, so dass die Gefahr einer Verschmutzung für den Benutzer ebenfalls reduziert ist.

Gemäß Anspruch 13 ist die Wippe mit den bezogen auf die Wippachse gegenüberliegenden Wippenbereichen symmetrisch ausgebildet, wobei die beiden gegenüberliegenden Wippenbereiche jeweils vorzugsweise tellerartig endseitig verbreitert sind, um eine genügend großflächige Standfläche für die Füße eines Benutzers auszubilden. In einem mittleren Bereich, in dem die beiden Wippenbereich verbunden sind, liegt somit eine Art Einschnürung vor. Die Wippe ist dabei vorzugsweise so ausgebildet, dass sie die Antriebsvorrichtung bestehend aus Antriebsgestänge, Antriebsgetriebe und Getriebegehäuse überdeckt. Damit übernimmt die Wippe vorteilhaft in einer Doppelfunktion auch eine Abdeckfunktion in der Art einer Gehäusewand.

Nach Anspruch 14 weist die Wippe eine im Querschnitt gesehen leicht V-förmige Anstellung auf, wodurch vom Benutzer auf besonders einfache Weise eine Wippkraft auf die beiden Wippbereiche aufbringbar ist.

Grundsätzlich gibt es verschiedene Möglichkeiten des Antriebs eines Fahrzeugs mit einer derartigen Vorrichtung. Bevorzugt ist das Fahrzeug jedoch nach Anspruch 15 als ein zweirädriger Roller ausgebildet, dessen Räder in einer Linie hintereinander sowie beabstandet voneinander angeordnet sind. Das Rollergestell ist hier in etwa L-förmig ausgebildet dergestalt, dass ein in etwa vertikal ausgerichteter L-Schenkel als Lenkstange in einem unteren Bereich drehbar an einem Ende des horizontal ausgerichteten L-Schenkels des Rollergestells gelagert ist. Am oberen Ende der Lenkstange ist eine Lenkerquerstange vorgesehen und am vom Anlenkpunkt ausgehend nach unten wegragenden unteren Lenkstangenende ist eines der Räder als Vorderrad angeordnet. Die Wippe mitsamt Antriebsvorrichtung ist in einem mittleren Bereich des horizontalen L-Schenkels angeordnet und über entsprechende Verbindungsmittel mit dem horizontalen L-Schenkel verbunden, wobei am dem Anlenkpunkt der Lenkstange gegenüberliegenden Endbereich des horizontalen L-Schenkel das Hinterrad angeordnet ist.

Alternativ zu diesem zweirädrigen Aufbau ist jedoch auch grundsätzlich eine Verwendung der Vorrichtung mit einem mehrrädrigen Fahrzeug, z. B. einem dreirädrigen Fahrzeug, möglich. An dem Roller können ferner noch andere Bedienelemente, wie z. B. eine Bremse oder ein abklappbarer Ständer, in herkömmlicher Weise angeordnet sein.

Die Erfindung wird nachfolgend anhand einer Zeichnung näher erläutert.

Es zeigen:
- Fig. 1: eine schematische Seitenansicht eines zweirädrigen Rollers mit einer erfindungsgemäßen Vorrichtung zur Übertragung einer Antriebskraft,
- Fig. 2: eine schematische vergrößerte Detaildarstellung der mit der Wippe gekoppelten Antriebsvorrichtung,
- Fig. 3: eine schematische Draufsicht entsprechend der Darstellung gemäß Fig. 2, und
- Fig. 4 bis 6: schematische Prinzipdarstellungen, die die Funktionsweise der erfindungsgemäßen Vorrichtung in unterschiedlichen Wippstellungen zeigen.

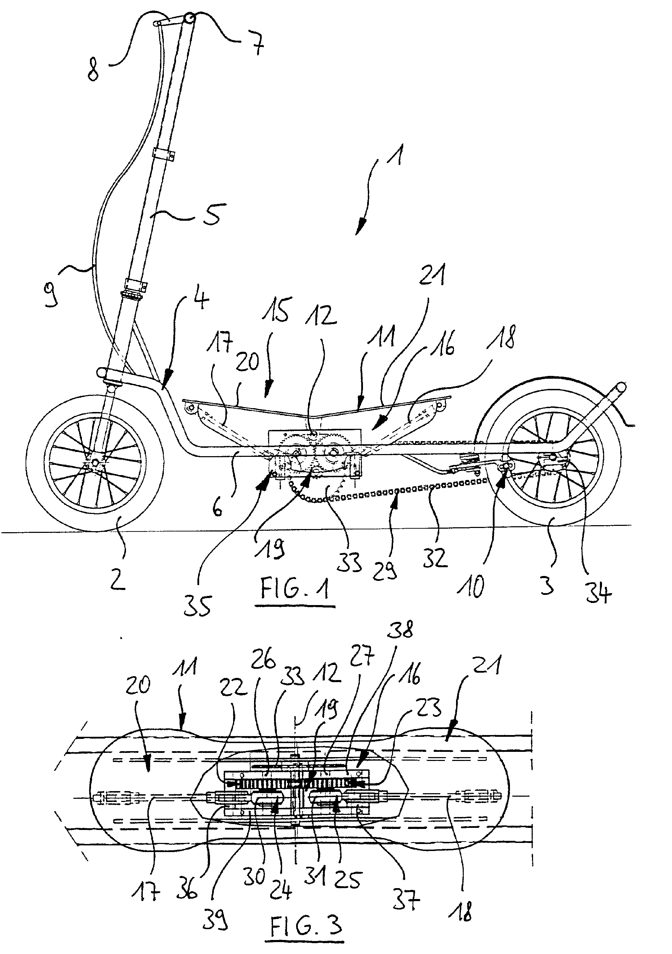

In der Fig. 1 ist schematisch ein zweirädriger Roller 1 gezeigt, der ein Vorderrad 2 und ein Hinterrad 3 sowie ein Rollergestell 4 aufweist. Das Rollergestell 4 ist in etwa L-förmig ausgebildet und umfasst einen in etwa vertikal ausgerichteten L-Schenkel als Lenkstange 5, der in einem unteren Bereich um eine Vertikalachse drehbar an einem Ende des horizontal ausgerichteten L-Schenkels 6 des Rollergestells 4 gelagert ist. Am oberen Ende der Lenkstange 5 ist eine Lenkerquerstange 7 angeordnet, an der ein Handbremsbügel 8 befestigt ist, der über ein Bremsseil 9 mit einer Backenbremse 10 am Hinterrad 3 des Rollers 1 in üblicher Weise gekoppelt ist.

Am der Lenkerquerstange 7 gegenüberliegenden unteren Lenkstangenende ist das Vorderrad 2 angeordnet.

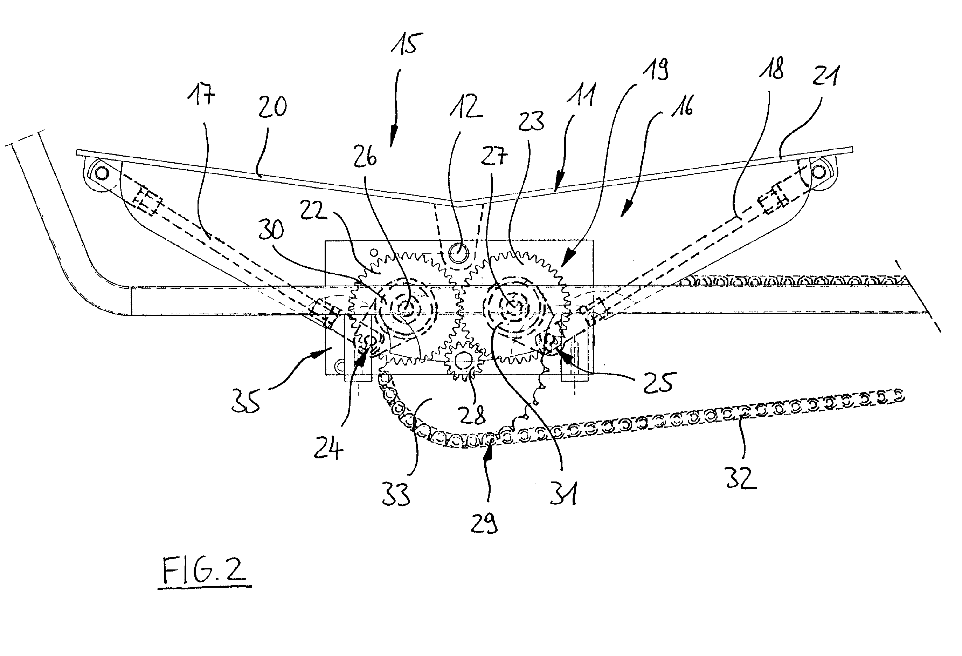

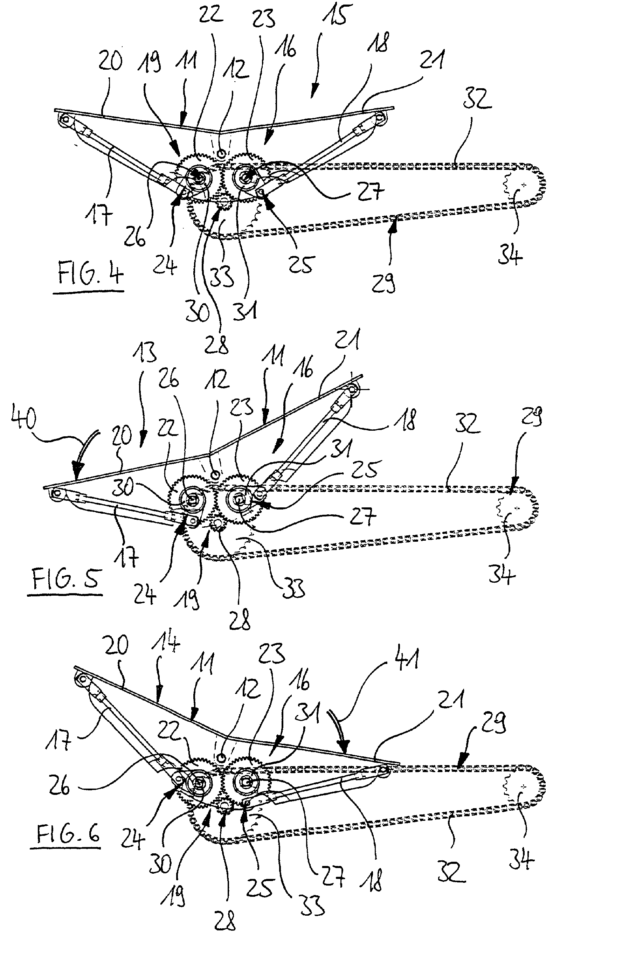

Eine als Wippe 11 ausgebildete Trittplatte ist in einem mittleren Bereich des horizontalen L-Schenkels 6 des Rollergestells 4 angeordnet. Die Wippe 11 ist hier als zweiseitige Wippe ausgebildet und um eine rollerfeste Wippachse 12 zwischen einer in der Fig. 5 schematisch dargestellten ersten maximalen Wippstellung 13 und einer in der Fig. 6 dargestellten zweiten maximalen Wippstellung 14 verschwenkbar. In der Darstellung der Fig. 1 ist die Wippe ebenso wie in den Darstellungen der Fig. 2 und 4 in einer Nullstellung 15 zwischen der ersten maximalen Wippstellung 13 und der zweiten maximalen Wippstellung 14 gezeigt, in der die Wippe 11 in etwa waagrecht ausgerichtet ist.

Wie dies insbesondere auch aus der Fig. 2, die eine schematische vergrößerte Detailansicht der Wippe 11 zeigt, und aus der Fig. 3, die eine Draufsicht auf die Darstellung gemäß Fig. 2 zeigt, ersichtlich ist, ist die Wippe 11 mit einer Antriebsvorrichtung 16 gekoppelt. Diese Antriebsvorrichtung 16 umfasst wiederum ein durch zwei Antriebsstangen 17, 18 gebildetes Antriebsgestänge, das mit einem Antriebsgetriebe 19 als weiterem Bestandteil der Antriebsvorrichtung 16 gekoppelt ist.

Die Wippe 11 ist im Querschnitt leicht V-förmig ausgebildet, wobei die Wippe 11 bezüglich der Wippachse 12 in zwei gleich ausgebildete symmetrische Wippenbereiche 20, 21 geteilt ist.

Jede der Antriebsstangen 17, 18 ist wippenseitig an einem endseitigen Bereich der Wippenbereiche 20, 21 vorzugsweise über eine Gabelverbindung angelenkt. Mit einem gegenüberliegenden Antriebsstangenende sind die Antriebsstangen 17, 18 ferner jeweils an einem Zahnradelement 22, 23, die Bestandteil des Antriebsgetriebes 19 sind, mittels jeweils einer durch ein Ratschenelement 24, 25 gebildeten Freilaufverbindung angelenkt. Die beiden Zahnradelemente 22, 23 und die Antriebsstange 17, 18 sind jeweils als Gleichteile ausgebildet, die zusammen mit der Wippe 11 ein in etwa gleichschenkliges Dreieck ausbilden, wie dies insbesondere aus den Fig. 1 und 3 ersichtlich ist. Die Drehachsen 26, 27 der Zahnradelemente 22, 23 liegen dabei in etwa auf gleicher Höhe, wobei die Wippachse 12 in einem mittleren Bereich zwischen den beiden Drehachsen 26, 27 oberhalb der Zahnradelemente 22, 23 liegt.

Die beiden Zahnradelemente 22, 23 stehen miteinander in Eingriff, wobei lediglich das bezüglich der Bildebene der Figuren rechte Zahnradelement 23 mit einem Antriebsritzel 28 eines durch einen Kettentrieb 29 gebildeten Hülltriebes kämmt.

Die Ratschenelemente 24, 25 umfassen jeweils ein Ratschenkopf 30, 31, der als Bestandteil der Antriebsstangen 17, 18 an dieser angelenkt ist und im Drehachsenbereich der Drehachsen 26, 27 mit dem jeweils zugeordneten Zahnradelement 22, 23 gekoppelt ist.

Wie dies insbesondere aus der Fig. 1 sowie aus den Fig. 4 bis 6 ersichtlich ist, umfasst der Kettentrieb 29 eine endlose Antriebskette 32, die ein Antriebsritzel-Kettenrad 33 im Bereich des Antriebsgetriebes 19 und ein im Nabenbereich des Hinterrades 3 gelagertes weiteres Kettenrad 34 umschlingt. Das Antriebsritzel-Kettenrad 33 ist fest mit dem Antriebsritzel 28 verbunden und zusammen mit diesem verdrehbar.

Am Hinterrad 3 kann zudem in Verbindung mit dem Kettenrad 34 auch eine hier nicht dargestellte Freilaufeinrichtung vorgesehen sein.

Wie dies insbesondere aus der Fig. 3 ersichtlich ist, ist das Antriebsgetriebe 19 in einem Getriebegehäuse 35 angeordnet, das durch zwei über zwei Abstandshalter 36, 37 beabstandete plattenförmige Gehäusewände 38, 39 ausgebildet ist. Die Zahnradelemente 22, 23, die Wippe 11 sowie das Antriebsritzel-Kettenrad 33 sind in den Gehäusewänden 38, 39 über hier aus Übersichtlichkeitsgründen nicht mit Bezugszeichen bezifferten Lagerbolzen in herkömmlicher Weise gelagert. Die Antriebsstangen 17, 18 sind aus dem Getriebegehäuse 35 heraus zu den entsprechend zugeordneten Wippenbereichen 20, 21 geführt.

Wie dies weiter aus der Fig. 3 ersichtlich ist, sind die beiden gegenüberliegenden Wippenbereiche 20, 21 jeweils endseitig tellerartig verbreitert, um eine großflächige Standfläche für einen Benutzer auszubilden.

Wie dies weiter insbesondere aus der Fig. 1 ersichtlich ist, überdeckt die Wippe 11 die Antriebsvorrichtung 16 von oben her.

Die Funktionsweise der Antriebsvorrichtung 16 wird nachfolgend anhand der Fig. 4 bis 6 näher erläutert. Ausgehend von der in der Fig. 4 dargestellten Nullstellung 15 der Wippe kann durch einen Benutzer entsprechend dem Pfeil 40 in Fig. 5 eine Wippkraft auf die Wippe 11 in Richtung der ersten maximalen Wippstellung 13 aufgebracht werden, wodurch die Wippe 11 um die Wippachse 12 verschwenkt wird. Durch dieses Verschwenken der Wippe 11 wird der Wippenbereich 20 nach vorne abgesenkt, wobei die Antriebsstange 17 entgegen der Freilaufwirkung des dieser zugeordneten Ratschenelements 24 mit dem Ratschenkopf 30 auf Block geht und so eine Schubkraft für ein Anschieben und Verdrehen des zugeordneten Zahnradelementes 22 ausübt. Das Zahnradelement 22 wird dabei von der Antriebsstange 17 in eine Richtung entgegen dem Uhrzeigersinn verdreht. Bei dieser Verdrehung des Zahnradelements 22 ist der Ratschenkopf 30 in etwa rechtwinklig zur Antriebsstange 17 ausgerichtet.

Aufgrund der Zwangskopplung des Zahnradselementes 23 mit dem Zahnradelement 22, wird auch dieses - allerdings in Uhrzeigerrichtung - verdreht, wobei, wie ein Vergleich der beiden Fig. 4 und 5 zeigt, diese Verdrehung des Zahnradelementes 23 unter Ausnutzung der durch das Ratschenelement 25 geschaffenen Freilaufverbindung durch die dem angehobenen Wippenbereich 21 zugeordnete Antriebsstange 18 nicht behindert wird. Wie dies in der Darstellung der Fig. 5 lediglich schematisch dargestellt ist, wird das Ratschenelement 25 dabei etwas nach oben angehoben und in Freilaufrichtung mehr in Richtung auf Zug hin belastet, wobei durch das Durchratschen sichergestellt ist, dass es zu keiner Blockade der Zahnradelemente 22, 23 kommt.

Bei einer Wippbewegung entsprechend Fig. 5 wird somit durch das Zahnradelement 22 das Antriebsritzel 28 entgegen dem Uhrzeigersinn angetrieben und damit auch das Antriebsritzel-Kettenrad 33, so dass eine entsprechende Antriebskraft für den Roller 1 in Vorwärtsrichtung über das Hinterrad 3 aufgebracht wird.

Nach dem Verschwenken der Wippe 11 in die in der Fig. 5 gezeigte erste maximale Wippstellung 13 kann durch eine entsprechende Verlagerung der Wippkraft entsprechend dem Pfeil 41 in der Fig. 6 eine Wippkraft in Richtung auf die zweite maximale Wippstellung 14 ausgeübt werden, wobei hier dann entsprechend umgekehrt zu der eben geschilderten Art und Weise die Antriebsstange 18 entgegen der Freilaufwirkung das Zahnradelement 23 im Uhrzeigersinn antreibt, während die zwangsgekoppelte Verdrehung des Zahnradelementes 22 unter Ausnutzung der Freilaufwirkung des Ratschenelements 24 nicht behindert und freigegeben wird. Dadurch ist ebenfalls eine Antriebsrichtung des Antriebsritzels 28 über das Zahnradelement 23 entgegen dem Uhrzeigersinn erreichbar, die über das Antriebsritzel-Kettenrad 33 wieder auf die Antriebskette 32 und damit das Hinterrad 2 in Vorwärtsfahrtrichtung des Rollers 1 übertragbar ist.

Damit wird vorteilhaft erreicht, dass bei jeder Verschwenkung der Wippe 11, das heißt sowohl in Richtung der ersten maximalen Wippstellung 13 als auch in Richtung der zweiten maximalen Wippstellung 14 über die Antriebsvorrichtung 16 eine stets in Fahrtrichtung wirkende Antriebskraft auf den Roller 1 übertragen werden kann.

## Patentansprüche

1. Vorrichtung zur Übertragung einer Antriebskraft auf ein mindestens zweirädriges Fahrzeug, insbesondere auf einen mit Muskelkraft antreibbaren Roller,
mit einer Trittplatte als Standfläche für einen Fahrzeugbenutzer sowie mit einer Antriebsvorrichtung,
**dadurch gekennzeichnet,**
**dass** die Trittplatte als zweiseitige Wippe (11) ausgebildet ist, die um eine fahrzeugfeste Wippachse (12) zwischen einer ersten maximalen Wippstellung (13) und einer zweiten maximalen Wippstellung (14) verschwenkbar ist, und
**dass** die Wippe (11) mit der Antriebsvorrichtung (16) gekoppelt ist dergestalt, dass bei jeder Verschwenkung der Wippe (11) um die Wippachse (12) in Richtung der ersten als auch in Richtung der zweiten maximalen Wippstellung (13, 14) über die Antriebsvorrichtung (16) eine stets in Fahrtrichtung wirkende Antriebskraft auf das Fahrzeug (1) übertragbar ist.

2. Vorrichtung nach Anspruch 1, **dadurch gekennzeichnet,**
**dass** die Antriebsvorrichtung (16) ein Antriebsgestänge (17, 18) aufweist, das einerseits mit der Wippe (11) und andererseits mit einem Antriebsgetriebe (19) als weiterem Bestandteil der Antriebsvorrichtung (16) gekoppelt ist, und
**dass** die Wippbewegung der Wippe (11) über das Antriebsgestänge (17, 18) auf das Antriebsgetriebe (19) übertragbar ist und dort in eine stets gleichgerichtete Antriebskraft umwandelbar ist.

3. Vorrichtung nach Anspruch 2, **dadurch gekennzeichnet,**
**dass** die Antriebsvorrichtung (16) zwei Antriebsstangen (17, 18) als Antriebsgestänge aufweist, die wippenseitig an bezüglich der Wippenachse (12) gegenüberliegenden Wippenbereichen (20, 21) angelenkt sind und die ferner an jeweils einem Zahnradelement (22, 23) als Bestandteil des Antriebsgetriebes (19) angelenkt sind, wobei wenigstens eine der beiden Antriebsstangen-Anlenkstellen, vorzugsweise die zahnradelementseitige Anlenkstelle, als Freilaufverbindung (24, 25) ausgebildet ist,
**dass** die beiden Zahnradelemente (22, 23) miteinander in Eingriff stehen,
**dass** bei einer Wippbewegung der Wippe (11) in Richtung der ersten oder zweiten maximalen Wippstellung (13, 14) die dem abgesenkten Wippenbereich zugeordnete Antriebsstange (17, 18) das dieser zugeordnete Zahnradelement (22, 23) entgegen der Freilaufwirkung der Freilaufverbindung (24, 25) anschiebt und verdreht, wobei aufgrund der Zwangskopplung der beiden Zahnradelemente (22, 23) auch das andere Zahnradelement (22, 23) gegenläufig dazu verdrehbar ist unter Ausnutzung der Freilaufwirkung der diesem anderen Zahnradelement (22, 23) zugeordneten Antriebsstangen-Freilaufverbindung (24, 25), und
**dass** eines der beiden Zahnradelemente (22, 23) als Antriebsritzel-Zahnradelement mit einem einen weiteren Bestandteil des Antriebsgetriebes (19) bildenden Antriebsritzel (28) eines Hülltriebs (29) kämmt.

4. Vorrichtung nach Anspruch 3, **dadurch gekennzeichnet, dass** die Antriebsstange (17, 18) bei einer Absenkung des dieser zugeordneten Wippenbereichs (20, 21) entgegen der Freilaufwirkung auf Schub für ein Anschieben und Verdrehen des zugeordneten Zahnradelementes (22, 23) und damit auch des damit zusammenwirkenden weiteren Zahnradelementes (22, 23) belastbar ist, deren dem angehobenen Wippenbereich (20, 21) zugeordnete Antriebsstange (17, 18) dieses Verdrehen unter Ausnutzung der Freilaufwirkung der Freilaufverbindung (24, 25) freigibt.

5. Vorrichtung nach Anspruch 3 oder Anspruch 4, **dadurch gekennzeichnet, dass** die beiden Zahnradelemente (22, 23) und die Antriebsstangen (17, 18) als Gleichteile ausgebildet sind, die zusammen mit der Wippe (11) in einer Nullstellung (15) der Wippe (11), bei der diese in etwa waagrecht ausgerichtet ist, eine Art gleichschenkliges Dreieck ausbilden.

6. Vorrichtung nach einem der Ansprüche 3 bis 5, **dadurch gekennzeichnet, dass** die Drehachsen (26, 27) der Zahnradelemente (22, 23) in etwa auf gleicher Höhe liegen und die Wippachse (12) in einem mittleren Bereich zwischen den beiden Drehachsen (26, 27) oberhalb der Zahnradelemente (22, 23) liegt.

7. Vorrichtung nach einem der Ansprüche 2 bis 6, **dadurch gekennzeichnet, dass** die Freilaufverbindung durch ein endseitig an jeder Antriebsstange (17, 18) ausgebildetes Ratschenelement (24, 25) ausgebildet ist.

8. Vorrichtung nach Anspruch 7, **dadurch gekennzeichnet,**
**dass** das Ratschenelement (24, 25) einen Ratschenkopf (30, 31) umfasst, der an der Antriebsstange (17, 18) angelenkt ist und in etwa im Bereich der Drehachse (26, 27) mit dem jeweils zugeordneten Zahnradelement (22, 23) gekoppelt ist, und
**dass** der Ratschenkopf (30, 31) bei einer Absenkung des diesem zugeordneten Wippenbereichs (20, 21) entgegen der Durchratschrichtung als Freilaufrichtung mit der Antriebsstange (17, 18) auf Block geht, um eine Schubkraft auf das zugeordnete Zahnradelement (22, 23) auszuüben, und bei einer Anhebung des diesem zugeordneten Wippenbereichs (20, 21) das Verdrehen des zugeordneten Zahnradelementes (22, 23) unter Ausnutzung des Durchratschens als Freilaufwirkung freigibt.

9. Vorrichtung nach einem der Ansprüche 3 bis 8, **dadurch gekennzeichnet, dass** der Hülltrieb (29) als formschlüssiges und/oder reib- und/oder kraftschlüssiges Zugmittelgetriebe ausgebildet ist.

10. Vorrichtung nach Anspruch 9, **dadurch gekennzeichnet,**
**dass** der Hülltrieb als Kettentrieb (29) ausgebildet ist, der eine endlose Antriebskette (32) aufweist, die wenigstens zwei Kettenräder (33, 34) umschlingt, und
**dass** eines der Kettenräder als Antriebsritzel-Kettenrad (33) fest mit dem Antriebsritzel (28) verbunden ist und zusammen mit diesem verdrehbar ist.

11. Vorrichtung nach Anspruch 10, **dadurch gekennzeichnet, dass** zusätzlich zum Antriebsritzel-Kettenrad (33) ein davon beabstandetes weiteres Kettenrad (34) vorgesehen ist, das im Radnabenbereich eines Rades (3) angeordnet ist und vorzugsweise mit einer Freilaufeinrichtung gekoppelt ist.

12. Vorrichtung nach einem der Ansprüche 3 bis 11, **dadurch gekennzeichnet,**
**dass** das Antriebsgestänge (17, 18) und das Antriebsgetriebe (19) in einem Getriebegehäuse (35) angeordnet sind, das durch zwei vorzugsweise über wenigstens einen Abstandshalter (36, 37) beabstandete plattenförmige Gehäusewände (38, 39) ausgebildet ist,
**dass** die Zahnradelemente (22, 23), die Wippe (11) sowie ein Kettenrad (34) eines Kettentriebes (29) als Hülltrieb über in den Gehäusewänden (38, 39) gelagerte Lagerbolzen vorzugsweise im Bereich zwischen den Gehäusewänden (38, 39) drehbar und/oder verschwenkbar angeordnet und gehalten sind, und
**dass** die Antriebsstangen(17, 18) aus dem Getriebegehäuse (35) heraus zu den zugeordneten Wippenbereichen (20, 21) geführt und dort angelenkt sind.

13. Vorrichtung nach einem der Ansprüche 1 bis 12, **dadurch gekennzeichnet,**
**dass** die Wippe (11) mit den bezogen auf die Wippachse (12) gegenüberliegenden Wippenbereichen (20, 21) symmetrisch ausgebildet ist,
**dass** die beiden gegenüberliegenden Wippenbereiche (20, 21) jeweils endseitig verbreitert sind als großflächige Standfläche für die Füße eines Benutzers und somit die Wippe (11) in einem mittleren Bereich eingeschnürt ist, und
**dass** die Wippe (11) die Antriebsvorrichtung bestehend aus Antriebsgestänge (17, 18), Antriebsgetriebe (19) und Getriebegehäuse (35) überdeckt.

14. Vorrichtung nach einem der Ansprüche 1 bis 13, **dadurch gekennzeichnet, dass** die Wippe (11) im Querschnitt gesehen eine leicht V-förmige Gestalt aufweist.

15. Vorrichtung nach einem der Ansprüche 1 bis 14, **dadurch gekennzeichnet,**
**dass** das Fahrzeug ein zweirädriger Roller (1) ist, dessen Räder (2, 3) in einer Linie hintereinander sowie beabstandet voneinander angeordnet sind,
**dass** ein Rollergestell (4) in etwa L-förmig ausgebildet ist dergestalt,
**dass** ein in etwa vertikal ausgerichteter L-Schenkel als Lenkstange (5) in einem unteren Bereich um eine Vertikalachse drehbar an einem Ende des horizontal ausgerichteten L-Schenkel (6) des Rollergestells (4) gelagert ist, wobei am oberen Ende der Lenkstange (5) eine Lenkerquerstange (7) vorgesehen ist und am vom Anlenkpunkt ausgehend nach unten wegragenden unteren Lenkstangenende eines der Räder als Vorderrad (2) angeordnet ist, und
**dass** die Wippe (11) mitsamt Antriebsvorrichtung (16) in einem mittleren Bereich des horizontalen L-Schenkels (6) angeordnet ist und über entsprechende Verbindungsmittel mit dem horizontalen L-Schenkel (6) verbunden ist, wobei am dem Anlenkpunkt der Lenkstange (5) gegenüberliegenden Endbereich des horizontalen L-Schenkels (6) das Hinterrad (3) angeordnet ist.
